# EUROPÄISCHE PATENTSCHRIFT

(11) **EP 2 266 936 B1**
(45) Veröffentlichungstag und Bekanntmachung des Hinweises auf die Patenterteilung: **03.04.2013**
(21) Anmeldenummer: 09008330.4
(22) Anmeldetag: 25.06.2009
(51) Int. Cl.: C05G 3/00

(54) **Düngemittelformkörper sowie Verfahren zu dessen Herstellung**
Fertiliser form body and method for its manufacture
Pièce de formage pour engrais et son procédé de fabrication

(43) Veröffentlichungstag der Anmeldung: 29.12.2010
(73) Patentinhaber: Hauert HBG Dünger AG, 3257 Grossaffoltern (CH)
(72) Erfinder: Hauert, Philipp, 2502 Biel (CH); Hauert, Hans-Jürg, 3257 Grossaffoltern (CH)
(74) Vertreter: Wunderlich, Rainer

(56) Entgegenhaltungen:
- WO-A-96/18591
- WO-A-2005/118123
- WO-A-2006/044393
- DE-A1- 10 062 598
- FR-A- 2 114 765
- FR-A- 2 874 008
- GB-A- 1 157 400
- US-A- 4 560 400
- DATABASE WPI Week 198921 Thomson Scientific, London, GB; AN 1989-153884 XP002555942 & JP 01 093487 A (NAKAYAMA KOGYO KK) 12. April 1989 (1989-04-12)

## Beschreibung

Die Erfindung betrifft einen Düngemittelformkörper gemäß Patentanspruch 9 sowie ein Verfahren zu dessen Herstellung gemäß Patentanspruch 1.

Düngemittel sind organische oder anorganische Stoffe, die dem Boden zur Verbesserung des Pflanzenwachstums oder der Ertragsteigerung zugeführt werden.

Rein organische Düngemittel stammen beispielsweise aus Kompostieranlagen, aus der Gülle von Viehmastbetrieben, gereinigten Klärschlämmen oder aus Flüssigphasen von anaerob betriebenen Biogasanlagen. Ferner werden anorganische Mineralsalze als Düngemittel verwendet. Typische Mineralien, welche das Pflanzenwachstum fördern, sind Phosphate oder Kaliumoxide. Ebenso bedeutend aber auch im Übermaß verwendet schädlich sind Nitrate, die insbesondere als Bestandteil von Viehgülle in der Landwirtschaft verwendet werden.

Aus dem Stand der Technik ist die Herstellung von mineralischen Düngemitteln insbesondere als Granulat bekannt. Gegenüber flüssigen oder feinpulvrigen Düngemitteln haben Düngemittelgranulate Vorteile hinsichtlich Transport, Lagerung und Handhabung. Granulate sind daher eine der gebräuchlichen Anwendungsformen von Düngemitteln.

An die Herstellung von Düngemitteln in Granulatform werden unterschiedliche Anforderungen gestellt. So soll das Granulat möglichst formgenau herstellbar sein. Eine möglichst homogene Größe stellt definierte, gleichmäßige Zerfallseigenschaften sicher, was für eine gezielte Nährstoffzuführung notwendig ist. Zudem wird eine gute Bindung innerhalb des Granulatkornes verlangt.

Nach längeren Transportvorgängen oder Lagerungsperioden können bei Düngemittelgranulaten zudem erhebliche Staubverluste auftreten. Derartige Staubverluste sind wirtschaftlich nachteilig, da staubförmige Düngemittelanteile schnell durch Wind und Wasser entfernt werden und für eine Nährstoffversorgung der Pflanzen nicht mehr zur Verfügung stehen. Weiterhin können sich durch die beim Ausbringen des Düngemittels gebildeten Stäube in der Luft unerwünschte Folgen für die Umwelt, etwa beim Einatmen durch Personen und Tiere, ergeben.

Die DD 246 227 A3 beschreibt einen thermoplastischen Formkörper, welcher Düngemittel enthält, auf der Basis eines extrudierfähigen Polyvinylharzes mit Füll- und Zusatzstoffen. Dieser Formkörper besteht aus einer Mischung von bis zu 50 Gew.-% PVC, bis zu 30 Gew.-% Volldünger und einem restlichen Anteil aus Weichmachern, synthetischem Gesteinsmehl, Gips, Holzmehl, Stabilisatoren, Gleitmittel und Farbstoffen.

Die DE 43 31 288 A1 beschreibt einen Düngemittel enthaltenden Formkörper bestehend aus einem thermoplastischen Material, in Form eines strukturierten Bandes, das aus nebeneinanderliegenden stabförmigen Einheiten gebildet ist, die über dünne, als Sollbruchstellen ausgestaltete Zwischenglieder miteinander verbunden sind.

Die DE 10 2004 057 841 A1 offenbart einen Formkörper zum Düngen und ein Verfahren zu dessen Herstellung, wobei der Formkörper neben mineralischen Düngemitteln organische Stoffe enthält und eine Kern-Hülle-Struktur besitzt. Als Zusammensetzung des Formkörpers wird eine homogene Mischung aus einem mineralischen oder organischen Stickstoff, Phosphate und Kaliumoxid enthaltende Düngemittel mit einem Kompostrest beschrieben.

Die DE 26 07 347 A1 beschreibt eine granulierte beziehungsweise formgepresste Düngemittelmasse mit einem Düngemittel und einem Bindemittel, wobei als Bindemittel Pullulan oder dessen Derivate verwendet werden. Zusätzlich sind weitere organische makromolekulare Verbindungen, insbesondere polymere Alkohole, zur Verbesserung der mechanischen Eigenschaften der Düngemittelmasse enthalten. Die Düngemittelmasse wird in einem Extrudierverfahren in eine Stäbchenform stranggepresst.

Aus der WO 2006/044393 A ist ein Verfahren zum Herstellen eines tabletten-Förmigen Düngemittel formkörpers aus Granulafkörnern bekannt.

Bei den genannten Verfahren werden die Düngemittelformkörper durch ein Verpressen oder Kompaktieren eines pulverförmigen Ausgangsmaterials gebildet.

Die dabei gebildeten Formkörper geben über einen längeren Zeitraum bei der Lagerung durch gegenseitigen Abrieb pulverförmiges Düngemittelmaterial ab. Ferner werden durch die Verpressungsvorgänge hochkompakte Düngemittelpartikel gebildet, welche sich nach dem Ausbringen nur relativ langsam auflösen und die Nährstoffe freisetzen. Zudem erfolgt durch die hochkompakte Strukturierung der Formkörper nur eine relativ ungleichmäßige Verteilung der freigesetzten Nährstoffe. Weiterhin sind diese Düngemittel häufig nicht genau zu dosieren.

Ausgehend von diesem Stand der Technik liegt der Erfindung die **Aufgabe** zugrunde, ein Verfahren bereitzustellen, das es auf einfache Weise erlaubt, ein Düngemittel rasch und dosiergenau in das Bodenmaterial einzubringen sowie eine effiziente Nährstofffreisetzung gewährleistet, welche auch über einen längeren Zeitraum bereitgestellt wird, wobei auch bei einer Lagerung der Formkörper nur eine relativ geringe Staubbildung durch Abrieb erfolgt.

Ferner liegt der Erfindung die Aufgabe zugrunde, einen derartigen Düngemittelformkörper zur Verfügung zu stellen.

Diese Aufgabe wird durch ein Verfahren gemäß Patentanspruch 1 gelöst. Ferner wird die Aufgabe durch einen Düngemittelformkörper mit den Merkmalen des Patentanspruchs 9 gelöst. Vorteilhafte Ausgestaltungen der Erfindung sind in den abhängigen Ansprüchen ausgeführt.

Durch die erfindungsgemäßen Merkmale wird ein Verfahren zur Herstellung von Düngemittelformkörpern bereitgestellt, das mit sehr geringem apparativen Aufwand zu wirtschaftlich günstigen Bedingungen Düngemittelformkörper bereitstellt, welche gezielt und einfach ausbringbar sind sowie über einen längeren Zeitraum eine gleichmäßige Düngemittelabgabe sicherstellen. Gleichzeitig wird eine hohe Dosiergenauigkeit des Düngemittels gewährleistet.

Bei dem erfindungsgemäßen Verfahren wird zunächst mindestens eine Düngemittelkomponente in Form von Granulatkörnern bereitgestellt, nachfolgend die Granulatkörner mit einem Bindemittel unter Bildung einer Formmasse vermischt und schließlich die Düngemittelformkörper in kugeliger Form aus der Formmasse gebildet. Durch die kugelige Form der Düngemittelformkörper wird eine gleichmäßige Durchfeuchtung und Abgabe von Düngemittel in allen Raumrichtungen erzielt. Aus der Granulatkörner aus Düngemittel enthaltenden Formmasse erfolgt gegebenenfalls nach dem Auflösen des Bindemittels zunächst eine rasche Freisetzung der einzelnen Granulatkörner in den Boden und nachfolgend ein langsamerer Abbau der freigesetzten Granulatkörner unter Abgabe der Nährstoffe. Somit kann das Düngemittel sehr dosiergenau in das Bodenmaterial eingebracht werden, was etwa für Topf- oder Balkonpflanzen sehr vorteilhaft ist. Die langsame Auflösung der Granulatkörner im Boden gewährleistet dabei eine relativ gleichmäßige langfristige Nährstofffreisetzung. Die Gleichmäßigkeit der Nährstofffreisetzung wird durch die kugelige Form der Düngemittelformkörper begünstigt, so dass eine homogene Versorgung der Bepflanzung mit Nährstoffen sichergestellt ist. Das Vermischen der Granulatkörner mit einem Bindemittel führt dazu, dass ein Abrieb und eine damit verbundene Staubbildung auch bei längerer Lagerung der Düngemittelformkörper unterbunden werden.

Erfindungsgemäß weisen die Granulatkörner im Wesentlichen eine Größe von 1 mm bis 5 mm auf.

Bei dieser Größe wird eine rasche Auflösung des Granulatkornes über einen definierten Zeitraum erreicht. Durch eine Variation des Durchmessers innerhalb dieser Bandbreite kann die Verweilzeit des Granulatkornes im Boden an die jeweiligen Bedingungen angepasst werden. Zudem können Granulatkörner dieser Größe mit herkömmlichen Granulationsvorrichtungen in wirtschaftlicher Weise einfach hergestellt werden. Im Vergleich zu einer pulverförmigen Form wird bei Granulatkörnern dieser Größenordnung die Nährstofffreisetzung über einen deutlich längeren Zeitraum erfolgen, so dass sich hierbei die gewünschte Langzeitwirkung des Düngemittels ergibt.

Es ist erfindungsgemäß, wenn die Granulatkörper gerundet sind und eine kugelige Form aufweisen.

Bei dieser Geometrie des Granulatkörpers wird eine gleichmäßige Freisetzung der Nährstoffe in allen Raumrichtungen erzielt. Zudem verteilen sich kugelförmige Partikel aufgrund der geringeren Reibungseffekte rascher im umgebenden Bodenmaterial als kantige Teilchen. Auch Abriebeffekte, die insbesondere bei der Lagerung unerwünscht sind, werden bei einer gerundeten Form gegenüber einer kantigen Geometrie erheblich reduziert. Darüber hinaus gewährleistet eine gerundete oder insbesondere kugelige Form einen rieselfähigen Zustand der Granulatkörper und erleichtert somit deren weitere Verarbeitung, insbesondere den Transport beziehungsweise nachfolgende Mischungsvorgänge mit anderen Komponenten.

Erfindungsgemäß wird die Formmasse mit den Granulatkörnern so zu der kugeligen Form des Düngemittelformkörpers geformt, dass zwischen den verbundenen Granulatkörnern definiert Freiräume verbleiben.

In diese Zwischenräume kann nach dem Ausbringen der Düngemittelformkörper Feuchtigkeit leicht in den Formkörper eindringen und somit den Zerfall des Formkörpers in die einzelnen Granulatkörper bewirken. Insbesondere ergibt sich dabei eine erhöhte innere Oberfläche des Düngemittelformkörpers, wodurch ein rasches Auflösen des Bindemittels und/oder ein Freisetzen der Granulatkörner begünstigt werden kann.

In einer ersten Stufe erfolgt eine relativ rasche Auflösung des Düngemittelformkörpers unter Freisetzung der Granulatkörner und in einem zweiten Schritt die Auflösung dieser Körner unter Abgabe der Nährstoffe in einem kinetisch deutlich langsameren Schritt, der über einen längeren Zeitraum anhält. Sowohl das Freisetzen der Granulatkörner aus dem Düngemittelformkörper wie auch die Abgabe der Nährstoffe aus den Granulatkörnern erfolgt aufgrund der kugeligen Form der Formkörper sowie der gerundeten Form der Granulatkörner in einer weitgehend isotropen Weise, so dass eine sehr homogene Nährstoffverteilung erreicht werden kann.

Es ist weiter vorteilhaft, wenn das Bindemittel thermoplastisch ist und mit den Granulatkörnern in einem erwärmten Zustand vermischt wird.

In einem erwärmten Zustand wird das thermoplastische Bindemittel weich und ist nicht mehr formstabil, so dass eine Vermischung mit den Granulatkörnern ermöglicht wird. Der Vorgang der Umwandlung in einen plastischen Zustand durch eine Erwärmung ist reversibel, so dass durch Abkühlung und Wiedererwärmung bis in den schmelzflüssigen Zustand der Prozess beliebig oft wiederholt werden kann, so lange nicht durch Überhitzung eine thermische Zersetzung des Materials einsetzt. Innerhalb des thermoplastischen Bereiches kann durch eine definierte Wahl der Erwärmungstemperatur die Viskosität des Bindemittels gezielt eingestellt werden, um so in Abhängigkeit von den äußeren Parametern, insbesondere der Größe der eingemischten Granulatkörner, die Vermischungsdauer zu optimieren. Nach dem Abkühlen des Bindemittels wird eine feste Konsistenz erreicht, welche eine gute Anhaftung der einzelnen Granulatkörner untereinander und die Formstabilität des Formkörpers bewirkt. Um die Vermischung der Granulatkörner mit dem thermoplastischen Bindemittel zu erleichtern, können die Granulatkörner mit heißer Luft vorerwärmt werden. Dadurch wird vermieden, dass in der unmittelbaren Umgebung der Granulatkörner eine Abkühlung des Bindemittels unterhalb der Erweichungstemperatur eintritt, so dass unerwünschte Aushärtungen des Bindemittels bereits während des Mischvorganges vermieden werden. Bei der Wahl des Bindemittels ist ferner darauf zu achten, dass die Fließeigenschaften der Nährstoffe aus den Granulatkörnern und der biologische Abbau insbesondere von gegebenenfalls zugesetztem Methylenharnstoff nicht nachteilig beeinflusst wird.

Erfindungsgemäß ist es, wenn als ein Bindemittel Polyethylenglykol ein thermoplastisches Polymer, vorgesehen wird.

Polyethylenglykol ist ein je nach Kettenlänge flüssiges oder festes, chemisch inertes, wasserlösliches und nicht-toxisches Polymer. Bei Molekülmassen über 3000 sind die Polyethylenglykole feste Substanzen und können als Schuppen oder Pulver im Handel erworben werden. Als wichtigste Eigenschaft der Polyethylenglykole hinsichtlich ihrer Verwendung in Verbindung mit Düngemitteln ist die Löslichkeit in Wasser. Ferner sind Polyethylenglykole nicht flüchtig und bis zu einer Temperatur von etwa 150° C thermisch stabil. Zudem weisen Polyethylenglykole außergewöhnlich niedrige Toxizitätswerte auf und zeichnen sich durch eine gute Hautverträglichkeit aus. Auch gegenüber Fischen und Mikroorganismen sind Polyethylenglykole nicht toxisch. Weiterhin sind Polyethylenglykole biologisch verhältnismäßig leicht abbaubar, wobei die Abbaubarkeit mit steigender mittlerer Molekülmasse abnimmt. Somit kann durch eine geeignete Variation der mittleren Molekülmasse des verwendeten Polyethylenglykols die Abbaukinetik der Düngemittelformkörper definiert eingestellt werden. Auch die Wasserlöslichkeit ist in vergleichbarer Weise von der mittleren Molekülmasse abhängig.

Besonders zweckmäßig ist es, wenn das Polyethylenglykol ein mittleres Molekulargewicht von etwa 3000 bis 5000, insbesondere von etwa 4000, aufweist.

In diesem Molekulargewichtsbereich ergibt sich für die Verwendung als Bestandteil von Düngemittelformkörpern einerseits sowohl eine angemessene Wasserlöslichkeit sowie eine gute biologische Abbaubarkeit, andererseits unterhalb der Erweichungstemperatur auch eine ausreichende Festigkeit, um die Formstabilität der Düngemittelformkörper zu gewährleisten. Bei einer geringeren Molekülmasse setzt eine zu rasche Auflösung des Polyethylenglykols und damit eine Freisetzung der Granulatkörner ein, während bei einer höheren Molekülmasse die Wasserlöslichkeit zu gering ist, und die Freisetzung der Granulatkörner zu langsam erfolgt, sowie die biologische Abbaubarkeit ebenfalls erheblich erschwert wird. Darüber hinaus nimmt bei einer zu hohen Molekularmasse die Sprödigkeit des Polyethylenglykols zu und somit auch dessen Eignung zu einer elastischen und dennoch formstabilen Verbindung der Granulatkörner. Zudem können bei Molekülmassen in diesem Bereich die entsprechenden Erweichungstemperaturen, die für eine Vermischung des Polyethylenglykols mit den Granulatkörnern zum Erzielen des thermoplastischen Zustandes erreicht werden müssen, in einem moderaten Bereich gehalten werden. So liegt die Erweichungstemperatur von Polyethylenglykol 4000 beispielsweise bei etwa 65° C, so dass die entsprechende vorbereitende Erwärmung des Polyethylenglykols einfach in einem Wasserbad erfolgen kann. Insbesondere kann Polyethylenglykol 4000 auch in größeren Maßstäben zu günstigen Konditionen bezogen werden. Die Erweichungstemperatur lässt sich durch Vermischen mit Anteilen niedermolekularer Polyethylenglykole zudem weiter reduzieren. Insgesamt stellt somit das Polyethylenglykol des betreffenden mittleren Molekulargewichtes ein thermoplastisches Polymer dar, welches zur Verwendung in Düngemittelformkörpern hinsichtlich Toxizität, Wasserlöslichkeit und biologischer Abbaubarkeit hervorragend geeignet ist.

In einer besonders bevorzugten Ausführungsform des erfindungsgemäßen Verfahrens sind zwei oder mehr unterschiedliche Düngemittelkomponenten mit Langzeit- und Kurzzeitwirkung vorgesehen. So können Granulatkörner unterschiedlicher Größe miteinander und auch pulverförmige Düngemittelkomponenten, gegebenenfalls mit unterschiedlichen Löslichkeiten, zu den Düngekugeln verarbeitet werden.

Mit diesen Komponenten kann über eine bestimmte Zeitperiode sowohl kurzfristig wie auch langfristig eine gleichmäßige und kontinuierliche Abgabe von Nährstoffen an das Bodenmaterial zur Versorgung von Pflanzen erreicht werden, so dass keine Unterbrechungen hinsichtlich einer Nährstoffversorgung auftreten, welche insbesondere bei sensiblen Pflanzengattungen nachteilige Effekte haben würde. Neben Düngemittelkomponenten mit unterschiedlichen zeitlichen Zerfallsperioden können verschiedene stoffliche Komponenten eingesetzt werden. So bietet sich beispielsweise eine Kombination von Komponenten auf organischer wie auch auf anorganischer Basis an, die sich zu einem umfassenden Nährstoffprofil ergänzen. Darüber hinaus können spezielle Düngemittelkomponenten mit genau auf die spezifisch zu versorgende Pflanzensorte zum Einsatz kommen. Ferner können Komponenten mit unterschiedlichen Wasserlöslichkeitseigenschaften eingesetzt werden, welche auf unterschiedliche Feuchtigkeitsverhältnisse im Bodenmaterial abgestimmt sind. Diese Anpassung der Löslichkeitseigenschaften kann beispielsweise über eine Variation der Molekülmasse des verwendeten Bindemittels, insbesondere von Polyethylenglykol, erfolgen. So wird bei einer niedrigeren Molekülmasse die Wasserlöslichkeit der Düngemittelkomponente abgesenkt, während sie bei einer relativ hohen Molekülmasse erhöht wird. Auf diese Weise kann in Abhängigkeit von den Eigenschaften des Bodenmaterials, der Feuchtigkeit, wie auch der zu versorgenden Pflanzensorten ein breites Spektrum spezifisch angepasster Düngemittelkomponenten bereitgestellt werden.

Geeigneterweise umfasst die Düngemittelkomponente einen Langzeitdünger, bei welchem die Granulatkörner kompaktiert und/oder mit einer Umhüllung, insbesondere mit einer hydrophoben Umhüllung, versehen werden.

Die Nährstofffreisetzung aus solchen umhüllten Düngemittelkomponenten erfolgt verzögert, da die Nährstoffe erst durch die Hüllschicht hindurchdiffundieren müssen, bevor sie in den Bodenbereich gelangen und von den Wurzeln aufgenommen werden können. Die Umhüllung von leicht wasserlöslichen Düngemittelgranulatkörnern kann mit einer selbsthärtenden Harzschicht erfolgen, mit dem Ziel, die so gewonnene Düngemittelkomponente aufgrund ihrer verzögerten Nährstoffabgabe bei geringerer Auswaschung und Umweltbelastung in landwirtschaftlichen Betrieben einzusetzen.

Hierfür können insbesondere Polymerisate verwendet werden, die das rasche Auflösen der leicht wasserlöslichen Salze und die damit verbundenen hohen Nährstoffverluste durch Auswaschung verringern oder gar vermeiden sollen.

Ferner muss sich die hydrophobe Umhüllung nicht ausschließlich auf den Randbereich erstrecken, sondern die hydrophobe Komponente kann auch homogen im Granulatkorn verteilt sein. Durch eine weitgehend homogene Vermischung eines hydrophoben organischen Materials mit mineralsalzhaltigen Bestandteilen wird erreicht, dass sich der hydrophobisierende Effekt, welcher für die Langzeitwirkung verantwortlich ist, über den Gesamtbereich des Düngemittelkörpers auswirkt. Dadurch kann sichergestellt werden, dass bei einer mechanischen Weiterverarbeitung, wie beispielsweise einer Zerkleinerung, keine Beeinträchtigung der Langzeitwirkung auftritt, da die hydrophobe Verbindung die Düngemittelkörper vollständig durchdringt.

Die mineralsalzhaltigen Komponenten sind somit homogen in einer Matrix des hydrophoben organischen Materials eingebettet, wobei die Hydrophobizität ein verzögertes Eindringen von Bodenfeuchtigkeit in den Düngemittelkörper und damit ein langsames Auswaschen des Mineralsalzes erlaubt. Dabei ist die Homogenität auch bei unterschiedlicher Korngröße gewährleistet, so dass über diesen Parameter die spezifische Oberfläche des Düngemittels und damit der Nährstoffstrom einfach und dennoch gezielt gesteuert werden kann. Ferner ist der hydrophobe Charakter der organischen Matrix durch geeignete Wahl der hydrophoben Verbindung weit variierbar, wodurch die Geschwindigkeit der Nährstofffreisetzung ebenfalls kontrolliert werden kann.

Als hydrophobes organisches Material eignet sich ein ölhaltiger natürlicher Rohstoff, insbesondere ölhaltiges Pflanzenmaterial, wie Samen, Kerne, Früchte und dergleichen. Ein derartiges ölhaltiges Material wird beispielsweise von sogenannten Ölpflanzen geliefert, die in ihren Samen, Kernen oder Früchten öl- oder fettartige Stoffe enthalten.

Besonders vorteilhaft ist es, wenn eine Düngemittelkomponente ein Mineralsalz, insbesondere ein stickstoff-, phosphor-, kalium-, calcium- oder ein magnesiumhaltiges Salz oder Methylenharnstoff, oder eine Kombination davon enthält.

Diese Mineralsalze umfassen die wichtigsten, für das Pflanzenwachstum erforderlichen Mineralsalze, wobei insbesondere Stickstoff, Phosphor und Kalium essenzielle Elemente darstellen und in dieser Kombination auch als sogenannte NPK-Dünger erhältlich sind. Als stickstoffhaltige Salze eignen sich insbesondere Ammoniumsulfat, Kalkammonsalpeter, Harnstoff, Harnstoff-Aldehyd-Kondensate, Stickstoffmagnesia, Ammonsulfatsalpeter, Kalksalpeter und Calciumcyanamid. Der als Nährstoff enthaltene Stickstoff wird durch Hydrolyse in Form von Ammoniak, Harnstoff oder Nitrat freigesetzt. Im Fall von Kalkstickstoff entsteht als Zwischenprodukt Cyanamid, das gleichzeitig als Unkrautvertilgungsmittel und Schädlingsgift dient.

Das Verhältnis der stickstoff-, phosphor- und kaliumhaltigen Salze in dem Düngemittelgranulatkorn kann je nach Wunsch im Hinblick auf die Erfordernisse der verschiedenen Pflanzen gewählt werden. Besonders vorteilhaft ist ein NPK-Verhältnis von etwa 12 : 7 : 11.

Geeignete phosphathaltige Salze sind beispielsweise Mono-, Doppel-, Tripel-Superphosphat, Thomasmehl oder Thomasphosphat, Dicalciumphosphat, weicherdiges Rohphosphat und teilaufgeschlossenes Rohphosphat.

Verwendbare Kalisalze sind beispielsweise reine Kalisalze wie Kaliumchlorid und Kaliumsulfat sowie Magnesium enthaltende Kalisalze wie Kalimagnesia. Vertreter der Kalk- beziehungsweise Magnesiumdünger sind zum Beispiel Calciumcarbonat wie Kalkstein und Kreide, Calciumoxid (Branntkalk), Kieserit und Dolomit. Die Verwendung von Methylenharnstoff als Düngemittelkomponente kann zu einer weiteren Erhöhung der Festigkeit und Stabilität im Düngemittelkorn beitragen.

Es ist weiter zweckmäßig, wenn der Formmasse weitere Additive, insbesondere Pflanzenschutzmittel, beigemischt werden.

Mit diesen Komponenten können die gewünschte Konsistenz, Dichte, Fließfähigkeit, Grenzflächeneigenschaften und andere physikalisch-chemische Merkmale definiert eingestellt werden. Ferner können die Additive eine keimtötende Wirkung aufweisen, um eine längerfristige Lagerung ohne die Gefahr von Pilzbefall und anderen Verrottungsprozessen zu ermöglichen. Als Pflanzenschutzmittel können insbesondere Alkylphosphate, Carbamate, Cumarine, Herbizide und Molluskizide eingesetzt werden.

Neben den bereits erwähnten Komponenten können als weitere Bestandteile Farbstoffe, beispielsweise zur Charakterisierung der Düngemittelart, sowie Vergällungsmittel um einen Schädlingsbefall oder eine Verwechslung mit Lebensmitteln zu vermeiden, zugesetzt werden.

Gegenstand der Erfindung ist auch ein Düngemittelformkörper gemäß den Merkmalen des Patentanspruchs 9, insbesondere hergestellt mit dem zuvor beschriebenen Verfahren, wobei dieser eine kugelige Form aufweist und aus Granulatkörnern mindestens einer Düngemittelkomponente gebildet ist.

Mit einem derartigen Düngemittelformkörper können die für das Pflanzenwachstum erforderlichen Nährstoffe dosiergenau und einfach ausgebracht werden. Dabei kann eine ganze Bandbreite von sowohl schnell wirkenden Komponenten als auch von Düngemittelkomponenten mit Langzeitwirkung, die dem Pflanzenwachstum angepasst sind, eingesetzt werden. Insbesondere können alle üblichen Düngemittelformen in jedem Verhältnis zueinander kombiniert und zu einer Kugelform verpresst werden. Die Kugelform hat den Vorteil, dass der biologische Abbau und die Durchfeuchtung von allen Seiten gleichmäßig ist. Somit erfolgt auch eine homogene Nährstofffreisetzung in isotroper Form, und lokale Nährstoffkonzentrationen beziehungsweise -senken mit entsprechend nachteiligen Folgen werden vermieden.

Es ist zweckmäßig, wenn der Formkörper ein Gewicht von etwa 1 bis 20 g aufweist. Erfindungsgemäß beträgt der Durchmesser etwa 5 bis 50 mm.

Bei diesem Gewicht und Abmessungen können die Formkörper mit hinreichender Festigkeit hergestellt werden, so dass diese insbesondere manuell in den zu behandelnden Bodenbereich eingesteckt werden, was insbesondere bei Topf oder Balkonpflanzen zweckmäßig ist. Ferner ergibt sich eine ausreichend große spezifische Oberfläche, die eine effektive Abgabe der Nährstoffe an das umgebende Bodenmaterial gewährleistet. Weiterhin können bei dieser Größe insbesondere auch einzelne Formkörper gezielt an ausgewählten Stellen des Bodens platziert und eingebracht werden.

Es sind verschiedene Ausführungsformen des erfindungsgemäßen Verfahrens denkbar. Im Folgenden wird eine bevorzugte Ausführungsform beispielhaft beschrieben:
Polyethylenglykol 4000 mit einem Massenanteil von etwa 10% wird als Bindemittel in einem Wasserbad auf etwa 65° C erhitzt und geschmolzen. Ferner werden Düngemittelgranulatkörner mit einem umhüllten und gegebenenfalls kompaktierten Langzeitdünger mit einem Massenanteil der restlichen 90% in einem heißen Luftstrom erwärmt bis sie eine Temperatur von etwa 65 bis 75° C aufweisen. Die erwärmten Düngemittelgranulatkörner werden in einer Mischeinrichtung mit der Schmelze aus Polyethylenglykol 4000 unter Bildung einer Formmasse homogen vermischt, wobei ein Polyethylenglykolfilm auf den Granulatkörnern gebildet wird. Nach dem Erreichen einer weitgehend homogenen Vermischung wird die Formmasse zur Portionierung in einzelne Formmatrizen gefüllt und nachfolgend in eine Kugelform mit einem mittleren Durchmesser von etwa 2 cm verpresst. Nach dem Verpressen und dem Abkühlen der kugelförmigen Formkörper sind diese weitgehend formstabil und können in größeren Stückzahlen verpackt und zur Lagerung oder zum Weitertransport vorbereitet werden.

## Patentansprüche

1. Verfahren zur Herstellung eines Düngemittelformkörpers aus Granulatkörnern mindestens einer Düngemittelkomponente mit den Schritten:
- Bereitstellen der Granulatkörner der mindestens einen Düngemittelkomponente, wobei
- - die Granulatkörner gerundet sind,
- - eine kugelige Form und
- - eine Größe von 1 mm bis 5 mm aufweisen,
- Vermischen der Granulatkörner mit Polyethylenglykol als einem Bindemittel und Bilden einer Formmasse und
- Bilden des Düngemittelformkörpers aus der Formmasse mit den Granulatkörnern, wobei
- - die Formmasse zu einer Kugelform verpresst wird und
- - ein Düngemittelformkörper mit einem Durchmesser von 5 mm bis 50 mm geformt wird,
- - wobei die kugeligen Granulatkörner untereinander anhaften und zwischen den verbundenen Granulatkörnern definiert Freiräume für ein erleichtertes Eindringen von Feuchtigkeit verbleiben.

2. Verfahren nach Anspruch 1,
**dadurch gekennzeichnet,**
**dass** das Bindemittel thermoplastisch ist und mit den Granulatkörnern in einem erwärmten Zustand vermischt wird.

3. Verfahren nach Anspruch 1 oder 2,
**dadurch gekennzeichnet,**
**dass** das Bindemittel ein thermoplastisches Polymer, insbesondere Polyethylenglykol, enthält.

4. Verfahren nach Anspruch 3,
**dadurch gekennzeichnet,**
**dass** das Polyethylenglykol ein mittleres Molekulargewicht von etwa 3000 bis 5000, insbesondere von etwa 4000, aufweist.

5. Verfahren nach einem der Ansprüche 1 bis 4,
**dadurch gekennzeichnet,**
**dass** zwei oder mehr unterschiedliche Düngemittelkomponenten mit Langzeit- und Kurzzeitwirkung vorgesehen werden.

6. Verfahren nach einem der Ansprüche 1 bis 5,
**dadurch gekennzeichnet,**
**dass** die Düngemittelkomponente einen Langzeitdünger umfasst, bei welchem die Granulatkörner kompaktiert und/oder mit einer Umhüllung, insbesondere einer hydrophoben Umhüllung, versehen werden.

7. Verfahren nach einem der Ansprüche 1 bis 6,
**dadurch gekennzeichnet,**
**dass** zumindest eine Düngemittelkomponente ein Mineralsalz, insbesondere ein stickstoff-, phosphor-, kalium-, calcium- oder ein magnesiumhaltiges Salz, Methylenharnstoff oder eine Kombination davon enthält.

8. Verfahren nach einem der Ansprüche 1 bis 7,
**dadurch gekennzeichnet,**
**dass** weitere Additive, insbesondere Pflanzenschutzmittel, der Formmasse beigemischt werden.

9. Düngemittelformkörper, hergestellt mit einem Verfahren nach einem der Ansprü- che 1 bis 8,
**dadurch gekennzeichnet,**
- **dass** dieser aus Granulatkörnern mindestens einer Düngemittelkomponente gebildet ist, wobei
- - die Granulatkörner gerundet sind,
- - eine kugelige Form und
- - eine Größe von 1 mm bis 5 mm aufweisen,
- **dass** der Düngemittelformkörper eine Kugelform und einen Durchmesser von etwa 5 mm bis 50 mm aufweist, und
- **dass** die Granulatkörner mit einem Bindemittel zu einer Formmasse vermischt sind, welche zum Bilden des Düngemittelformkörpers zu der Kugelform verpresst ist, wobei die kugeligen Granulatkörner untereinander anhaften und zwischen den verbundenen Granulatkörnern definiert Freiräume für ein erleichtertes Eindringen von Feuchtigkeit verbleiben.

10. Düngemittelformkörper nach Anspruch 9,
**dadurch gekennzeichnet,**
**dass** der Formkörper ein Gewicht von etwa 1 bis 20 g aufweist.

## Claims

1. Method for producing a fertilizer molded body from granules of at least one fertilizer component comprising the steps:
- providing the granules of the at least one fertilizer component,
wherein
-- the granules are rounded,
-- have a spherical shape and
-- a size of 1 mm to 5 mm,
- mixing the granules with polyethylene glycol as a binding agent and forming a molding composition and
- forming the fertilizer molded body of the molding composition with the granules, wherein
-- the molding composition is pressed to a spherical shape and
-- a fertilizer molded body with a diameter of 5 mm to 50 mm is molded,
-- wherein the spherical granules adhere to each other and between the bonded granules free spaces remain in a defined manner for facilitated penetration of moisture.

2. Method according to claim 1,
**characterized in that**
the binding agent is thermoplastic and mixed with the granules in a heated state.

3. Method according to claim 1 or 2,
**characterized in that**
the binding agent contains a thermoplastic polymer, in particular polyethylene glycol.

4. Method according to claim 3,
**characterized in that**
the polyethylene glycol has an average molecular weight of approximately 3000 to 5000, in particular of approximately 4000.

5. Method according to any one of claims 1 to 4,
**characterized in that**
two or more different fertilizer components with long-term and short-term effect are provided.

6. Method according to any one of claims 1 to 5,
**characterized in that**
the fertilizer component comprises a long-term fertilizer, in which the granules are compacted and/or provided with a coating, in particular a hydrophobic coating.

7. Method according to any one of claims 1 to 6,
**characterized in that**
at least one fertilizer component contains a mineral salt, in particular a nitrogen-, phosphor-, potassium-, calcium- or magnesium-containing salt, methylene urea or a combination thereof.

8. Method according to any one of claims 1 to 7,
**characterized in that**
further additives, in particular plant protecting agents, are mixed into the molding composition.

9. Fertilizer molded body, produced with a method according to any one of claims 1 to 8,
**characterized in that**
- the said fertilizer molded body is formed of granules of at least one fertilizer component, wherein
-- the granules are rounded,
-- have a spherical shape and
-- a size of 1 mm to 5 mm,
- **in that** the fertilizer molded body has a spherical shape and a diameter of approximately 5 mm to 50 mm and
- **in that** the granules are mixed with a binding agent to a molding composition, which is pressed to the spherical shape in order to form the fertilizer molded body, wherein the spherical granules adhere to each other and between the bonded granules free spaces remain in a defined manner for facilitated penetration of moisture.

10. Fertilizer molded body according to claim 9,
**characterized in that**
the molded body has a weight of approximately 1 to 20 g.

## Revendications

1. Procédé de fabrication d'un corps moulé d'engrais à partir de grains granulés d'au moins un composant d'engrais, comportant les étapes suivantes :
- fourniture des grains granulés du composant d'engrais au nombre d'au moins un, dans lequel
-- les grains granulés sont ronds,
-- présentent une forme sphérique, et
-- ont une taille de 1 mm à 5 mm,
- mélange des grains granulés avec du polyéthylène glycol en tant que liant et formation d'une masse de moulage, et
- formation du corps moulé d'engrais à partir de la masse de moulage avec les grains granulés, dans lequel
-- la masse de moulage est pressée en une forme sphérique, et
-- un corps moulé d'engrais d'un diamètre de 5 mm à 50 mm est formé,
-- les grains granulés sphériques adhérent les uns aux autres et il reste entre les grains granulés liés des interstices définis pour faciliter la pénétration d'humidité.

2. Procédé selon la revendication 1, **caractérisé en ce que** le liant est thermoplastique et est mélangé aux grains granulés dans un état chauffé.

3. Procédé selon la revendication 1 ou 2, **caractérisé en ce que** le liant contient un polymère thermoplastique, en particulier du polyéthylène glycol.

4. Procédé selon la revendication 3, **caractérisé en ce que** le polyéthylène glycol présente un poids moléculaire moyen d'environ 3000 à 5000, en particulier d'environ 4000.

5. Procédé selon l'une des revendications 1 à 4, **caractérisé en ce que** deux ou plusieurs composants d'engrais différents à effet à long terme et à court terme sont prévus.

6. Procédé selon l'une des revendications 1 à 5, **caractérisé en ce que** les composants d'engrais comprennent un engrais à long terme, pour lequel les grains granulés sont compactés et/ou sont munis d'une enveloppe, en particulier d'une enveloppe hydrophobe.

7. Procédé selon l'une des revendications 1 à 6, **caractérisé en ce qu'**au moins un composant d'engrais contient un sel minéral, en particulier un sel contenant de l'azote, du phosphore, du potassium, dû calcium ou du magnésium, de la méthylène-urée, ou une combinaison de ceux-ci.

8. Procédé selon l'une des revendications 1 à 7, **caractérisé en ce que** d'autres additifs, en particulier des agents phytosanitaires, sont mélangés à la masse de moulage.

9. Corps mollé d'engrais fabriqué par un procédé selon l'une des revendications 1 à 8,
**caractérisé en ce que**
- celui-ci est formé de grains granulés d'au moins un composant d'engrais, dans lequel
-- les grains granulés sont ronds,
-- présentent une forme sphérique, et
-- ont une taille de 1 mm à 5 mm,
- **en ce que** le corps moulé d'engrais présente une forme sphérique et un diamètre de 5 mm à 50 mm, et
- les grains granulés sont mélangés avec un liant en une masse de moulage qui est pressée en une forme sphérique pour former corps moulé d'engrais, dans lequel les grains granulés sphériques adhérant les uns aux autres et il reste entre les grains granulés liés des interstices définis pour faciliter la pénétration d'humidité.

10. Corps moulé d'engrais selon la revendication 9, **caractérisé en ce que** le corps moulé présente un poids d'environ 1 à 20 g.
